# EUROPÄISCHE PATENTSCHRIFT

(11) **EP 0 895 693 B1**
(45) Veröffentlichungstag und Bekanntmachung des Hinweises auf die Patenterteilung: **17.07.2002**
(21) Anmeldenummer: 97921732.0
(22) Anmeldetag: 24.04.1997
(51) Int. Cl.: H04N 5/445, G06F 3/023

(54) **VERFAHREN ZUR BILDSCHIRMANZEIGE UND BILDSCHIRMANZEIGEEINRICHTUNG ZUM DURCHFÜHREN DES VERFAHRENS**
PROCESS AND DEVICE FOR DISPLAYING INFORMATION ON A SCREEN
PROCEDE DE PRESENTATION SUR ECRAN ET DISPOSITIF DE PRESENTATION SUR ECRAN APPROPRIE

(30) Priorität: 25.04.1996 DE 19616624
(43) Veröffentlichungstag der Anmeldung: 10.02.1999
(60) Teilanmeldung: 01130944.0
(73) Patentinhaber: I.P. Global, Ltd., Washington, DC 20006 (US)
(72) Erfinder: GÖKEN, Klaus, G., D-28857 Syke-Gessel (DE)
(74) Vertreter: Eisenführ, Speiser & Partner
(86) Internationale Anmeldenummer: EP9702083
(87) Internationale Veröffentlichungsnummer: WO9741685

(56) Entgegenhaltungen:
- EP-A- 0 342 838
- EP-A- 0 616 283
- US-A- 4 270 145
- US-A- 4 907 082
- US-A- 5 237 443
- US-A- 5 408 275
- US-A- 5 434 626

## Beschreibung

Die Erfindung betrifft ein Verfahren und eine Vorrichtung zum Erzeugen von Anzeigen analoger Betriebsparameter auf einem Bildschirm, wobei eine Zeichenerzeugungseinrichtung derart gesteuert wird, daß sie ein Anzeigesignal erzeugt, welches aus einer Anzahl von Zeichen besteht, wobei die Anzahl der Zeichen in etwa dem Pegel oder der Anzahl der eingestellten Inkremente des dem Signal zugeordneten Betriebsparameters proportional ist. Ein solches Verfahren ist bekannt aus der DE-A-29 20 023.

Das bekannte Verfahren wird in einer Vielzahl von Variationen bei den verschiedensten Typen von Bildschirmanzeigeeinrichtungen z. B. Monitore, Fernsehempfänger, Satellitenempfänger, Projektoren u.dgl. realisiert.

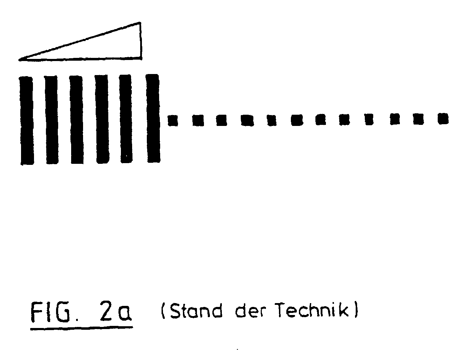

Fig. 2a) zeigt eine schematische Darstellung einer der bekanntesten Bildschirmanzeigevariationen.

Die bekannten Bildschirmanzeigen - on-Screen-Displays - kann man in zwei wesentliche Kategorien einteilen: In eine symbolische Anzeige und in eine numerische Anzeige. Bei der symbolischen Anzeige werden Zeichen, fast ausschließlich abstrakte Zeichen, erzeugt, und die Anzahl der erzeugten Zeichen ist dem Pegel des Betriebsparameters bzw. der Anzahl der eingestellten Inkremente des inkrementell einstellbaren Betriebsparameters in etwa proportional. So ist in Fig. 2a ein Beispiel dargestellt, bei dem sechs vertikal ausgerichtete Balken - als erste Zeichen - dem Benutzer eine Information über die aktuelle Einstellung des Betriebsparameters wiedergeben.

Bei der bekannten numerischen Bildschirmanzeige wird eine Zahl z. B. die Zahl 6 auf dem Bildschirm eingeblendet und die Zahl selbst ist dem Pegel des Betriebsparameters und/oder der Anzahl der eingestellten Inkremente des Betriebsparameters in etwa proportional. Selbstverständlich sind auch Mischformen der symbolischen und numerischen Anzeige anzutreffen.

In Fig. 2a) sind rechts von den vertikal aufgestellten länglichen Balken noch in etwa quadratische kleine Zeichen - als zweite Zeichen - angeordnet, so daß der Benutzer weiß, inwieweit erden anzuzeigenden Betriebsparameter ausgesteuert hat, weil die Gesamtzahl der Zeichen (Balken und kleine Zeichen) ihm ein Maß für die maximale Aussteuerung des Betriebsparameters geben.

Die voran beschriebenen Bildschirmanzeigen haben sich größtenteils bewährt, was auch dazu geführt hat, daß Bildschirmanzeigen der oben beschriebenen Art in mehr als 90% von allen Fernsehempfängern, Monitoren, Satellitenempfängern oder anderen Geräten der Unterhaltungselektronik Einzug gehalten haben, weil durch die Bildschirmanzeigen es dem Benutzer möglich ist, einen gewünschten Betriebsparameter optimal und einfach einzustellen, ohne auf die Wiedergabe eines bestimmten Videosignals angewiesen zu sein, weil durch die Bildschirmanzeige dem Benutzer ein klarer Hinweis auf die Einstellung des Betriebsparameters gegeben wird. Neben einer Vielzahl von Vorteilen der videosignalempfangsunabhängigen Bildschirmanzeige haben die bisherigen Bildschirmanzeigen jedoch auch einige Nachteile. So kann im Fall einer Bildschirmanzeige, wie sie in der Fig. 2a) dargestellt ist, der Benutzer kaum die Anzahl der ersten Zeichen schnell erkennen und kann sich deshalb nur sehr schlecht eine gewünschte Einstellung merken. Bei der in Fig. 2a) dargestellten Bildschirmanzeige sind zwar die einzelnen Zeichen voneinander unterscheidbar und deshalb deutlich zu erkennen, jedoch muß der Benutzer, wenn er sich eine Einstellung merken möchte, die einzelnen Zeichen abzählen und sich diese Zahl merken wie die Zahl bei einer numerischen Anzeige.

Es ist deshalb Ziel der Erfindung, das Erinnerungsvermögen des Betrachters bzw. des Benutzers der Bildschirmanzeigeeinrichtung zu unterstützen und eine einfache Bedienung hierfür vorzusehen.

Dieses Ziel wird erfindungsgemäß mit dem in den Ansprüchen angegebenen Verfahren und der Bildschirmanzeigeeinrichtung erreicht.

Die Erfindung beruht auf der Erkenntnis, daß das Farb- und Formerinnerungsvermögen des Menschen regelmäßig deutlich besser ausgebildet ist als sein Zahlenerinnerungsvermögen. So weiß ein Autobesitzer auch noch nach 20 Jahren, welche Farbe sein erstes Automobil hatte, während er schon lange sein damaliges Nummernschild vergessen hat. Auch fällt es Menschen regelmäßig schwer, sich überhaupt Zahlen zu merken, z.B. Telefonnummern, Hausnummern etc. Gleiches gilt, wie oben bereits erwähnt, auch für eine numerische Angabe bei der Bildschirmanzeige, zumal der Benutzer durch das wiedergegebene Bild meistens so abgelenkt ist, daß er sich kaum auf die Anzahl der Zeichen oder auf eine Zahl einer numerischen Anzeige selbst konzentriert.

Mittels der Erfindung ist es auch teilweise gar nicht mehr notwendig, sich die Anzahl der Zeichen zu merken, wenn sich der Benutzer nur auf dasjenige Zeichen konzentriert, welches auf das zuletzt eingestellte Inkrement bzw. den aktuellen Wert des Betriebsparameters hinweist. Auf dieses Zeichen schaut der Benutzer zwar auch bei bisherigen Bildschirmanzeigen, weil dieses Zeichen jedoch identisch (Farbe, Form) ist mit allen anderen benachbarten Zeichen, z.B. in Fig. 2a links von dem rechten Balken, kann sich der Benutzer aufgrund der Lage des Zeichens selbst keinen Eindruck über den Wert des eingestellten Betriebsparameters machen, sondern muß alle Zeichen abzählen.

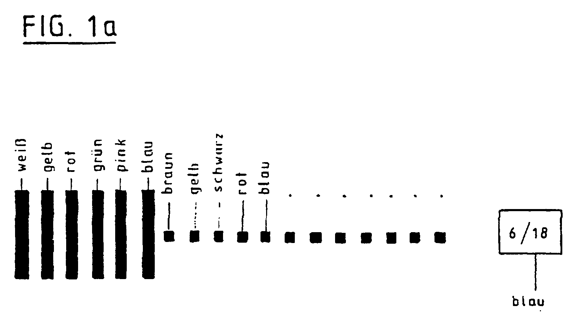

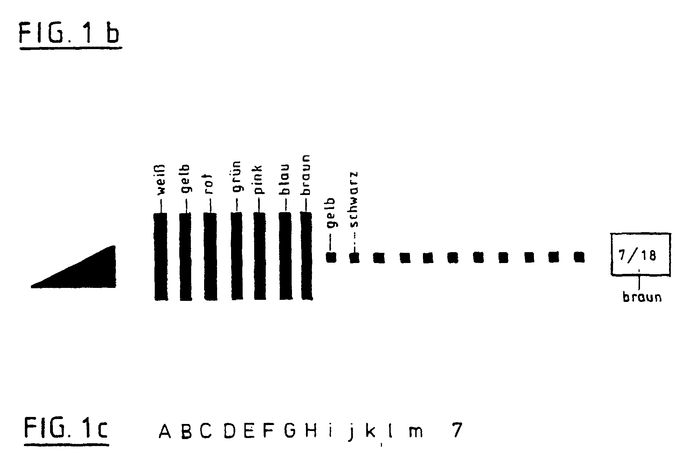

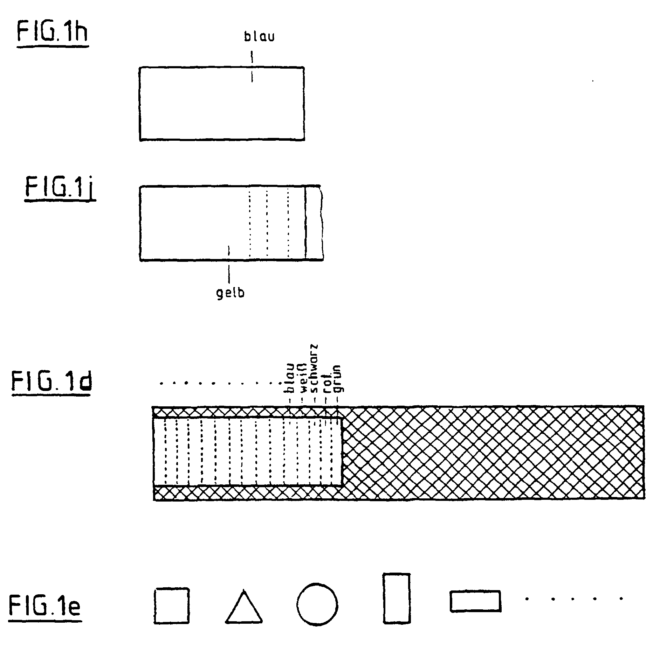

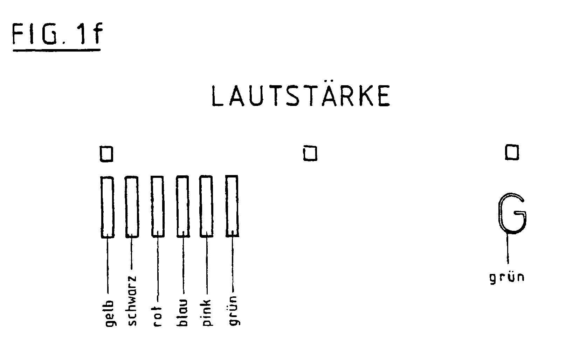

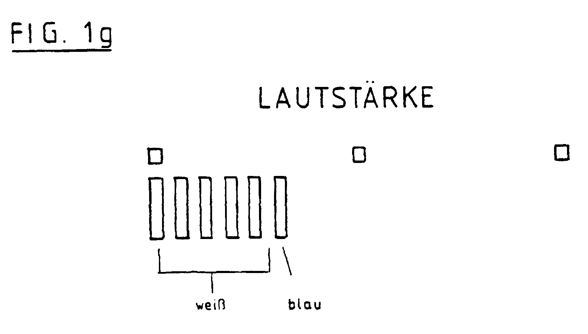

Bei der Erfindung jedoch haben benachbarte Zeichen bzw. Zeichen aufeinander folgender Parameterwerte ein unterschiedliches Aussehen, z.B. in ihrer Farbe und/oder Form. Verschiedene Beispiele hierfür sind in Fig. 1 dargestellt. Bei einer numerischen Anzeige ist die Zahlanzeige einem bestimmter Farb- und/oder vom Wert zugeordnet, d. h., daß sich mit einer Änderung der numerischen Anzeige stets auch eine Farb- und/oder Form-Änderung der Zahlenangabe selbst oder deren Hintergrund einstellt. Der Benutzer braucht sich also nur noch statt einer Zahl die zugeordnete Farbe und/oder Form zu merken, um zu einer gewünschten Einstellung zurückzukehren bzw. um sich den aktuellen Wert zu merken.

Durch die Erzeugung von unterschiedlichen Farbsignalen für benachbarte Zeichen erscheinen die einzelnen Zeichen in unterschiedlichen Farben auf dem Bildschirm, was nicht nur zum Erinnerungsvermögen des Benutzers dient, sondern auch den ästhetischen Eindruck der Bildschirmanzeige deutlich verbessert.

Die Erfindung ist nachfolgend anhand zeichnerisch dargestellter Ausführungsbeispiele näher erläutert. In der Zeichnung stellen dar:
- Fig. 1a-j: Darstellungsbeispiele verschiedener erfinderischer Anzeigen;
- Fig. 2a: Darstellungsbeispiel einer bekannter Bildschirmanzeige;
- Fig. 2b: Darstellungsbeispiel einer alternativen Bildschirmanzeige zu Fig. 1;
- Fig. 3: ein Blockschaltbild der wesentlichen Baugruppen eines Bildwiedergabegerätes;
- Fig. 4: ein Blockdiagramm eines Bildschirmanzeigesystems;
- Fig. 5a: eine Ansicht eines erfindungsgemäßen Bedienungsorgans;
- Fig. 5b: ein Blockschaltdiagramm mit einem erfindungsgemäßen Bedienungsorgan;
- Fig. 5c: Beispielansicht einer auf einem Bildschirm eingeblendeten Menütabelle, die von dem Bedienorgan ansteuerbar ist;
- Fig. 5d: eine Seitenansicht eines erfindungsgemäßen Bedienungsorgans; und
- Fig. 5e: eine Aufsicht auf eine Fernbedienung mit einem erfindungsgemäßen Bedienungsorgan.

Fig. 1a zeigt eine Bildschirmanzeige bestehend aus einer Gruppe von ersten Zeichen, die durch farbige vertikal ausgerichtete Balken gekennzeichnet sind, und einer Gruppe aus zweiten Zeichen, welche als kleinere Quadrate rechts von den Balken angeordnet sind. Benachbarte Zeichen sind in einer deutlich unterschiedlichen Farbe ausgeführt. Die in Fig. 1 dargestellte Anzeige weist den Benutzer darauf hin, daß er eine Einstellung eines physikalischen Betriebsparameters vorgenommen hat, welche den sechs ersten Zeichen entspricht und daß das blaue erste Zeichen auf das zuletzt eingestellte Inkrement hindeutet. Erhöht der Benutzer den Wert des Betriebsparameters, so wird je nach Proportionalität der Zuordnung der ersten Zeichen zu den aufgerufenen Inkrementen, früher oder später das zweite Zeichen in braun, welches in Fig. 1a rechts von dem blauen ersten Zeichen angeordnet ist, durch eine Zeichenform entsprechend dem ersten Zeichen ersetzt, verbleibt jedoch in der Farbe pink. Eine solche Einstellung ist in Fig. 1b gezeigt.

Der Benutzer muß sich nicht unbedingt an die Zahl der ersten Zeichen erinnern, um später die gewünschte Einstellung wieder aufzurufen, sondern merkt sich automatisch die Farbe desjenigen ersten Zeichen, welches auf die gewünschte Einstellung hinweist.

Selbstverständlich ist es auch möglich, daß die zweiten Zeichen durchgehend in der gleichen Farbe erscheinen oder daß die Zeichen, welche in Fig. 1a links von dem blauen Zeichen angeordnet sind, unifarben gestaltet sind. Es ist jedoch wichtig, daß einem bestimmten Wert eines physikalischen Parameters bzw. das ihn repräsentierende Zeichen in einer bestimmten Farbe auf dem Bildschirm erscheint. Benachbarte Zeichen bzw. Betriebsparameterwerte sollten daher vorzugsweise stets in unterschiedlichen Farben auf dem Bildschirm erscheinen bzw. symbolisiert werden. Selbstverständlich ist es möglich, daß sich eine bestimmte Farbfolge nach einer bestimmten Anzahl von Zeichen wiederholt.

Fig. 1c zeigt eine alternative Bildschirmdarstellung, wobei die ersten Zeichen durch Großbuchstaben und die zweiten Zeichen durch Kleinbuchstaben repräsentiert werden. Ferner unterscheiden sich die einzelnen Zeichen untereinander durch ihren Buchstabenwert.

In Fig. 1d ist eine zu Fig. 1a vergleichbare Bildschirmdarstellung gezeigt, wobei die ersten Zeichen zu einem Balken geschmolzen sind, weil keine Lücken zwischen benachbarten ersten Zeichen vorhanden sind.

In Fig. 1e sind benachbarte Zeichen durch eine unterschiedliche Zeichenform gestaltet. In Fig. 1f sind die zweiten Zeichen weggelassen. Es ist selbstverständlich, daß die Einblendung einer numerischen Anzeigen wie in Fig. 1a, 1b wahlweise erfolgen kann oder die abstrakten Zeichen ersetzen können.

In Fig. 1g ist nur dasjenige Zeichen farbig gestaltet, welches auf den aktuellen Wert des Betriebsparameters hinweist. Erhöht sich der Wert des Betriebsparameters und wird ein weiteres erstes Zeichen aufgerufen, so erscheint dies in einer anderen Farbe, z. B. gelb und alle Zeichen links von dem farbigen (jetzt gelben) Zeichen sind einfarbig gestaltet.

In Fig. 1h ist ein blauer Balken gezeigt, welcher aus mehreren blauen Rechtsecken besteht, die zu einem Balken verschmolzen sind. Mit Erhöhung des Betriebsparameterwertes um ein weiteres Inkrement, d. h. mit Höhe des Einstellwertes um eine weitere Einheit - siehe Fig. 1j - wird der gesamte Balken gelb und die Zahl der Zeichen, d. h. der Rechtecke, ist um 1 erhöht.

Fig. 2a zeigt eine bekannte unifarbene Bildschirmanzeigedarstellung.

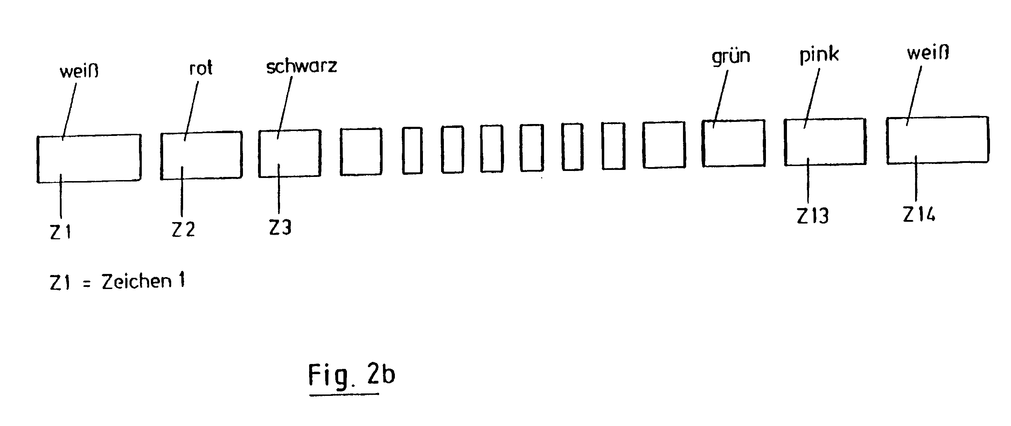

Fig. 2b zeigt eine Bildschirmanzeigedarstellung, bei der die Schrittweite bzw. der Inkrementenhub eines Betriebsparameters im Bereich der Maximalwerte deutlich größer ist als im Bereich der Normaleinstellung, z.B. der Zimmerlautstärke.

Hierbei ist die Größe bzw. Länge eine einzelnen Zeichens dem entsprechenden Inkrementenhub in etwa proportional. Dies erlaubt es dem Benutzer, im Bereich der Normaleinstellung, z.B. der Zimmerlautstärke, sehr feine Unterschiede einzustellen, während im Bereich der Minimal- bzw. Maximalwerte größere Inkrementen-Schrittweiten vorgesehen sind, weil es in diesen Bereichen dem Benutzer erfahrungsgemäß weniger auf eine sehr feine Einstellung ankommt. Bei der Lautstärkeeinstellung können folgende Zuordnungen der Zeichen zu dem Inkrementenhub/Schrittweite vorgesehen werden:

| | |
|---|---|
| Zeichen 1 | 10 dB |
| Zeichen 2 | 8 dB |
| Zeichen 3 | 6 dB |
| Zeichen 4 | 4 dB |
| Zeichen 5 | 0,5 bis 1 dB |
| Zeichen 6 | 0,5 bis 1 dB |
| Zeichen 7 | 0,5 bis 1 dB |
| Zeichen 8 | 0,5 bis 1 dB |
| Zeichen 9 | 0,5 bis 1 dB |
| Zeichen 10 | 0,5 bis 1 dB |
| Zeichen 11 | 4 dB |
| Zeichen 12 | 6 dB |
| Zeichen 13 | 8 dB |
| Zeichen 14 | 20 dB |

Somit wird dem Benutzer eine Bedienungsvereinfachung zur Verfügung gestellt, die seinen persönlichen Wünschen entgegenkommt und ihm gleichzeitig erlaubt, sich ein Bild über die aktuelle Einstellung eines Betriebsparameters zu machen.

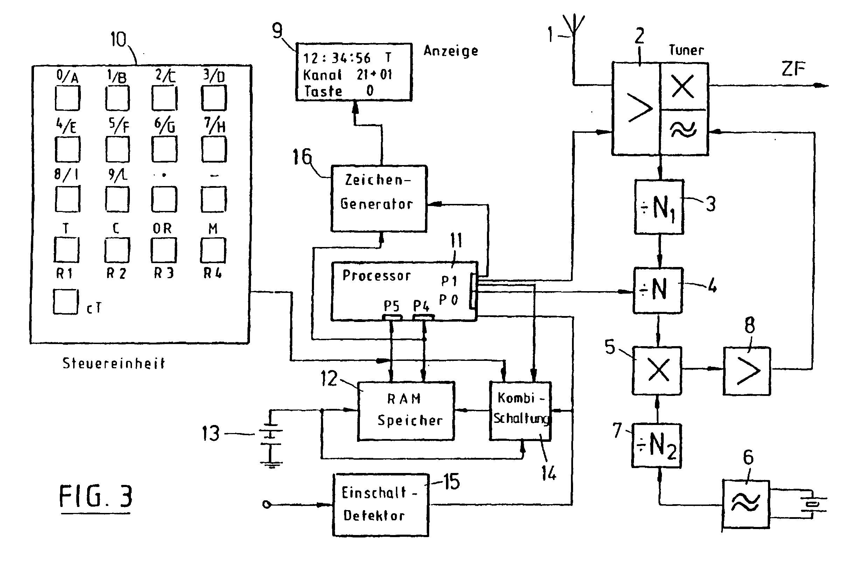

In Fig. 3 ist ein Blockschaltbild eines Wiedergabegerätes, im gezeigten Beispiel ein Fernsehempfänger, dargestellt mit einer Empfangsantenne 1, die mit einem Tuner 2 mit veränderlichen Kapazitätsdioden verbunden ist. Am Ausgang des Tuners steht ein auf eine Zwischenfrequenz IF umgesetztes Signal zur Verfügung. Der Tuner 2 kann in bekannter Weise aufgebaut sein und besteht im wesentlichen aus einer selektiven Verstärkerstufe, einem Mischer und einem internen Oszillator.

Der Ausgang des Oszillators ist mit einem ersten Frequenzteiler 3 verbunden, der die Ausgangsfrequenz des Oszillators durch einen fest vorgegebenen Divisor N teilt. Der Ausgang des ersten Frequenzteilers ist mit dem Signaleingang eines zweiten Frequenzteilers 4 verbunden, der die Ausgangsfrequenz des ersten Frequenzteilers durch einen variablen Divisor N teilt und der mit 12-Bit Programmiersignalen ansteuerbar ist, so daß er durch jeden Divisor N zwischen 1 und 2¹² teilen kann.

Der Ausgang des zweiten Frequenzteilers 4 ist mit einem ersten Eingang eines Phasen-Frequenz-Komparators 5 verbunden, an dessen zweitem Eingang ein Referenzsignal anliegt, welches von einem Quarzgenerator 6 über einen dritten Frequenzteiler 7 zugeführt wird. Der Ausgang des Komparators 5 ist über einen Verstärker- und Filterkreis 8 mit dem Steuereingang des Tuners 2 verbunden.

Weiterhin ist eine Steuereinheit 10, z.B. eine Fernbedienung, vorgesehen, welche neben den übrigen Steuertasten für das Ein- und Ausschalten, die Lautstärke, Helligkeit, Kontrast und Farbabstimmung zusätzlich 10 Zifferntasten aufweist, die mit 0 bis 9 (oder als Buchstabentasten mit den Buchstaben A bis L) bezeichnet sind. An der Steuereinheit 10 sind weiterhin sieben Hilfstasten vorgesehen, die mit den Symbolen +, -, t, c, or, m, ct (oder +, -, r1, r2, r3, r4, ct) bezeichnet sind.

Die Steuereinheit 10 ist mit einer ersten Gruppe von acht Eingangs/Ausgangs-Anschlüssen eines Prozessors 211 und mit den Adresseneingängen an Speicher 12 verbunden. Der Prozessor 11 weist außerdem einen zweiten Satz von acht Eingangs/Ausgangs-Anschlüssen auf, die mit den Dateneingangs/Ausgangs-Anschlüssen des Speichers 12 und außerdem mit den Eingängen eines Zeichengraphikgenerators 16 verbunden sind, der mit einer Anzeigeeinheit 9 verbindbar ist (welcher Bestandteil der Bildröhre der Empfängereinheit ist). Eine dritte Gruppe von 16 Anschlüssen des Prozessors 11 ist mit folgenden Anschlüssen der weiteren Schaltkreise verbunden:
- mit 12 Programmiereingängen des zweiten Frequenzteilers 4,
- mit 2 Band-Umschalteingängen (U und B III) des Tuners 2,
- mit einem Steuereingang des Zeichengenerators 16,
- mit einem ersten Eingang einer Kombinierschaltung 14.

Der Speicher 12 besitzt weiterhin zwei Steuereingänge, die mit dem Ausgang der Kombinierschaltung 14 verbunden sind, die an einem zweiten Eingang ein Signal des Prozessors 11 und an einem dritten Eingang ein Signal von einem Einschaltdetektor empfängt. Der Detektor 15 empfängt seinerseits ein Signal von der Hauptspannungsversorgung des Fernsehempfängers, während sein Ausgang zusätzlich mit einem Rückstelleingang des Prozessors 11 verbunden ist. Der Speicher 12 und die Kombinierschaltung 14, welche aus CMOS-Elementen aufgebaut ist und einen geringen Stromverbrauch hat, sind mit einer internen Speicherspannungsquelle, insbesondere mit einer Batterie 13 verbunden.

Die Schaltkreise 3, 4, 5 und 8 bilden zusammen mit dem internen spannungsgesteuerten Oszillator (VCO) des Tuners 2 eine phasenstarre Schleife, die in bekannter Weise durch das von dem dritten Frequenzteiler 7 heruntergeteilte Ausgangssignal des Quarzgenerators 6 gesteuert wird.

Bei geeigneter Steuerung über das Tastenfeld sind unter Anwendung teilweise üblicher Verfahren verschiedene Betriebsarten mögliche, um eine Abstimmung auf eine vorgegebene Sendestation vorzunehmen.

Betätigt der Benutzer eine Betriebsparametereinstellungstaste auf der Fernbedienung, so erscheint automatisch eine Bildschirmanzeige in der Ausgestaltung nach Fig. 1. Bei der Betriebsparametereinstellung wird ein Befehl der Fernbedienung an das zu steuerende Gerät geschickt und dieser Befehl von dem Prozessor 11 verarbeitet. Der Prozessor 11 ist zur Steuerung des Betriebsparameters mit dem Speicher 12 verbunden, in dem die Betriebsparameterdaten und die entsprechenden Schrittweiten der Betriebsparameter gespeichert sind. Ferner ist der Prozessor 11 mit dem Zeichengenerator 16, der ferner einen Zeichenspeicher aufweist, zur Einblendung der Bildschirmanzeige verbunden. Die einem Einstellwert eines Betriebparameters zugeordneten Form- und/oder Farbsignale bzw. -Daten sind in dem Prozessor 11 oder vorzugsweise zusammen mit den einzelnen Einstellwerten im Speicher 12 gespeichert und werden bei Einstellung eines bestimmten Parameters abgerufen und als entsprechender Farb- oder Formbefehl an den Zeichengenerator weitergeleitet. Die Farb- undloder Formsignale aufeinanderfolgender Einstellwerte sind wie zuvor beschrieben unterschiedlich, wobei für die entsprechende Wiedergabe eine Vielzahl von Variationen denkbar sind, von denen Fig. 1 nur einige vorteilhafte Beispiele zeigt.

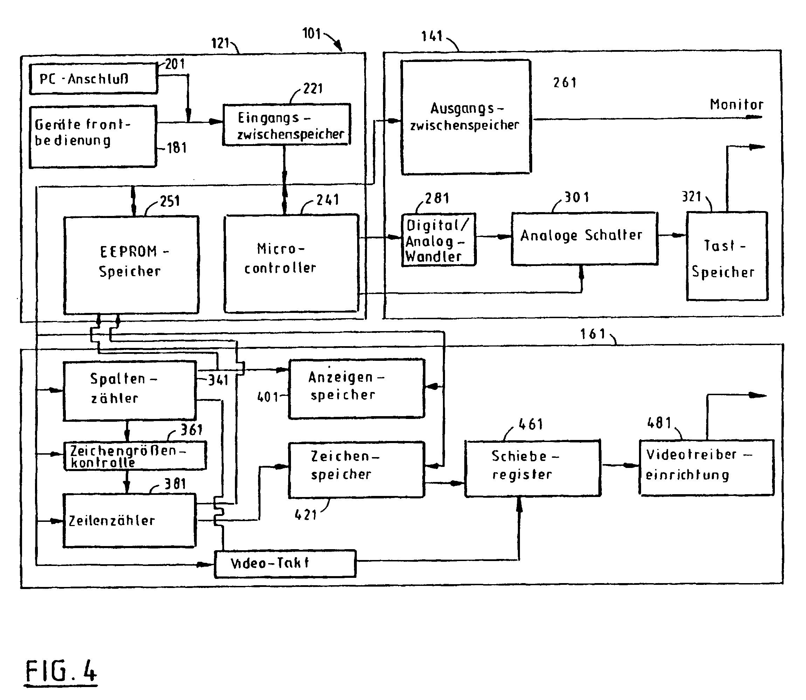

Zum besseren Verständnis der Bildschirmanzeigendarstellung wird auf Fig. 4 verwiesen. Hierbei besteht das Bildschirmanzeigemenüsystem 101 aus drei funktionalen Blöcken. Einem Eingangs-, Speicher- und Steuerblock 121, einem Videoanzeigeeinstellungsblock 141 und einem Zeichenanzeigenblock 161. Innerhalb des Blocks 121, welcher entweder Teil einer Gerätefrontbedienung 181 oder eines PC-Anschlusses 201 ist, können entsprechende Tasten zur Einstellung ausgewählter Betriebsparameter in dem System 101 bedient werden. Die Eingabewerte werden für bestimmte Zeit in einem Zwischenspeicher 221 gespeichert. Ein Mikrocontroller 241 empfängt diese Eingabeinformationen von dem Eingangszwischenspeicher 221, und speichert die geänderten Eingabewerte des anzuzeigenden Betriebsparameters in einem EEPROM-Speicher 251.

Der Mikrocontroller 241 ist im Anzeigeeinstellungsblock 141 mit einem Digital/-Analog-Wandler 281 (DAC) verbunden, welcher einen digitalen Einstellwert in ein analoges Signal wandelt und dieses entsprechend an einen analogen Schalter überträgt, damit ein Betriebsparameterwert seinen vom Benutzer gewünschten Wert annimmt.

Der Zeichenanzeigeblock 161 enthält die Hardware zum Erzeugen und Aussenden der Bildschirmanzeigeinformationen zu einer Anzeigeeinheit (nicht dargestellt). Die Funktionsweise der Zeichenerzeugung selbst ist z.B. aus EP-0 543 089 bekannt. Durch einen entsprechenden Befehl des Mikrocontrollers 241 werden aus dem Zeichenspeicher (Zeichen PROM) 421 Zeichen vorbestimmter Größe, Form und Farbe ausgewählt und zu einer Bildschirmanzeigezeile in dem Anzeigenspeicher 401 zusammengestellt. Das Ergebnis wird über eine Videotreibereinrichtung 481 an die Anzeigeeinheit abgegeben und erscheint somit auf dem gewünschten Bildschirm in der gewünschten Form. Ändert sich der Wert eines Betriebsparameters und damit die Zahl der ersten Zeichen, so wird eine entsprechend geänderte Bildschirmanzeigenzeilenzusammenstellung vorgenommen und angezeigt.

Ein Betriebsparameter kann nur vorbestimmte Werte annehmen, die abschließend im dem Steuerblock 121 z.B. in Form einer Tabelle im Speicher 251 gespeichert sind.

Ist beispielsweise vorgesehen, daß bei jeder Lautstärkeerhöhung, die nur stufenweise erfolgen kann, mit dem nächst höheren Lautstärkenwert eine Lautstärkeanhebung von 5 dB vorgesehen ist, so beträgt der Inkrementenhub 5 dB. Durch eine entsprechende Speicherung können die gewünschten Inkrementenhübe vorher festgelegt werden. Durch eine entsprechende Programmzuordnung eines Betriebsparameters zu einem Zeichen können einem entsprechenden Inkrement entsprechende Zeicheninformationen, Form, Farbe, Größe etc., zugeordnet werden und entsprechende Bildschirmanzeigen zusammengestellt werden.

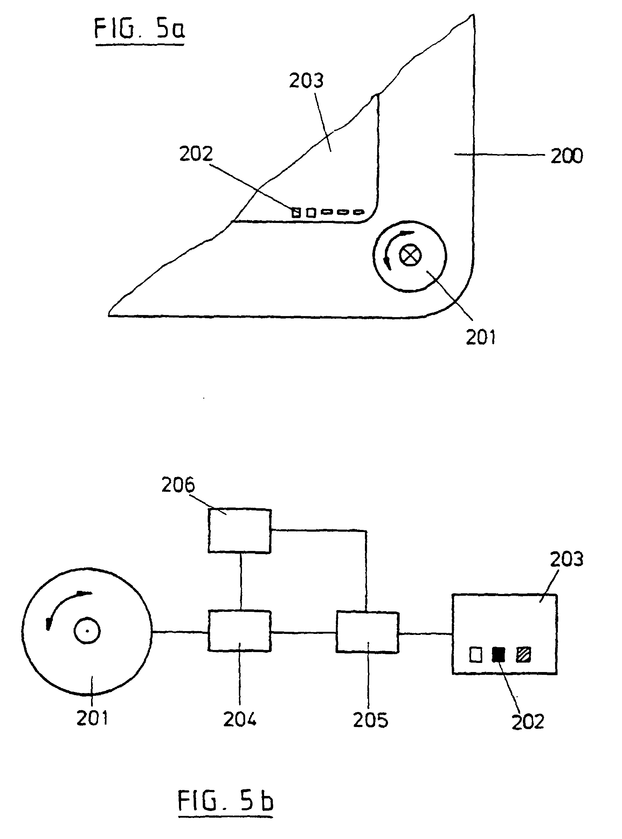

Fig. 5a zeigt eine Teilansicht eines elektronischen Gerätes, z.B. eines Fernsehempfängers 200 oder eines Monitors. Das Gerät verfügt über ein Einorgan-Stellglied 201 mittels dem sowohl verschiedene Betriebsparameter-modi aufrufbar, als auch im Wert einstellbar sind und mit dem ferner das Gerät ein- und ausschaltbar ist.

Das Einorganstellglied 201 ist ein Stellglied, welches drehbar ist und eindrückbar und/oder herausziehbar ist. Dem Stellglied ist -siehe Fig. 5b- ein Bewegungsaufnehmer 204 zugeordnet, welcher entsprechende Bedienaktionen des Bedienorgangs erfaßt und in entsprechende Signale umwandelt, die von einer Signalauswerte-Steuereinheit 205, z.B. einem Mikroprozessor, ausgewertet und in Befehlssignale umgesetzt werden. Diese Befehlssignale werden zur gewünschten Steuerung des Gerätes als auch zum Aufruf eines gewünschten Bildschirmanzeigesignals 202 auf dem Bildschirm 203 verwendet.

Ferner kann das Bedienorgan mit einer Zeitschaltuhr 206 verbunden werden, welche die zeitliche Dauer einer Bedienaktion erfaßt und ein entsprechendes Zeitsignal an die Auswerteeinheit sendet. Wird beispielsweise das Stellglied für eine bestimmte Zeit gedrückt (d.h. in die Zeichenebene hinein), so sendet die Zeitschaltuhr nach Überschreiten einer vorbestimmten Zeitdauer einen Befehl an die Auswerteeinheit, die dieses Signal als Ausschalt- oder Einschaltsignal, je nachdem welcher Zustand vorher erreicht war, wertet und schaltet das Gerät ein oder aus.

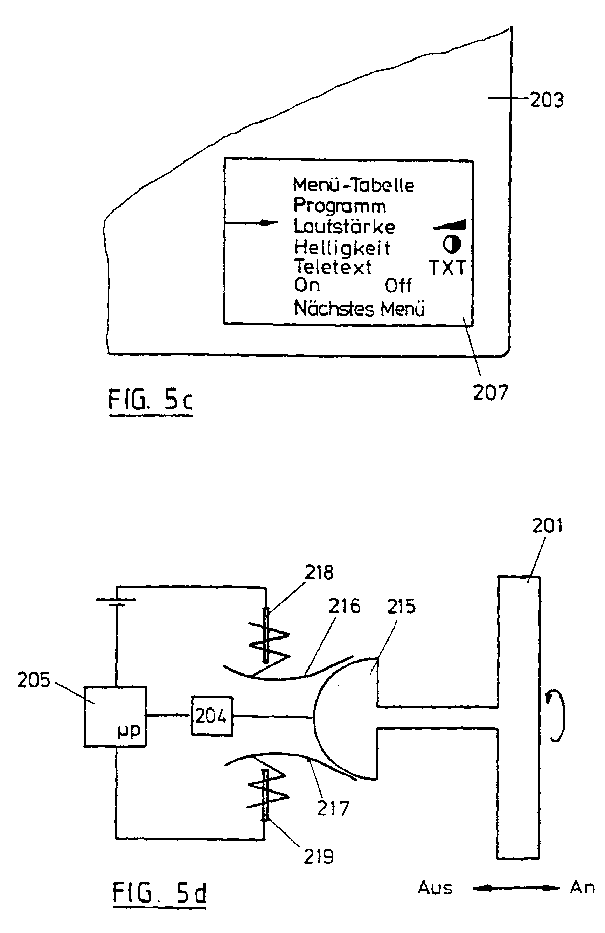

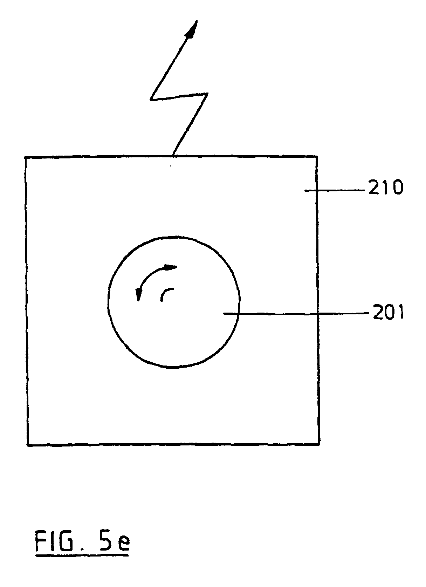

Solange das Stellglied nur eine vorbestimmte kürzere Zeitdauer eingedrückt oder herausgezogen ist, so wird dies dahingehend ausgewertet, daß der Benutzer einen nächsten Betriebsparametermodus einstellen möchte. Hierzu wird auf dem Bildschirm ein entsprechendes Menüsystem - Fig. 5c - angezeigt, bei dem mittels eines entsprechenden Zeigers, z.B. eines Cursors oder einer entsprechenden Farbmarkierung, auf einen Betriebsmodus, z.B. Lautstärke, Helligkeit, usw. hingewiesen wird. Weist der Zeiger auf einen Betriebsmodus wie Lautstärke hin, so kann der Benutzer durch Drehen des Bedienorgans den gewünschten Wert einstellen. Bei einem Drehen nach links wird der Wert des Betriebsparameters verringert, bei einem Drehen nach rechts wird der Wert des Betriebsparameters vergrößert, während eine gemäß Fig. 1 gezeigte Bildschirmdarstellung 202 auf dem Bildschirm erscheint.

Somit können sämtliche gewünschte Funktionen des zu steuernden Gerätes mit einem einzigen Bedienungsorgan bedient werden.

Drückt nun der Benutzer das Stellglied länger als z.B. 2 Sekunden, so wird ein entsprechendes Ausschaltsignal von der Auswerteeinheit erfaßt und das Gerät wird ganz abgeschaltet.

Die Ausschaltfunktion kann auch dadurch erreicht werden, daß das Bedienorgan nach Überwindung eines Druckpunktes -siehe Fig. 5d- eingedrückt wird und ein entsprechender Ausschaltkontakt nach Eindringen des Bedienorgans in das Gerät zustande kommt, der für die Ausschaltung sorgt. Durch Herausbewegung bzw. Herausziehen des Stellgliedes 201 kann dann die Einschaltung des Gerätes erreicht werden. Bei der in Fig. 5d dargestellten Ansicht weist das Bedienorgan 201 einen Kopf 215 auf, welcher beim Eindrücken von zwei Federn gelagerten Schalen 216, 217 aufgenommen wird. Wird der Federdruck entsprechend überwunden, kontaktieren die Schalen mit entsprechenden Gegenkontakten 218 und 219, so daß ein Schaltkontakt entsteht, welcher für die Ausschaltung des Gerätes sorgt.

Das Bedienorgan ist eine sehr vorteilhafte Ergänzung zur vorstehend beschriebenen Bildschirmanzeige, kann jedoch auch unabhängig hiervon verwirklicht werden. Selbstverständlich kann das Einorgan-Stellglied 201 auch auf einer Fernbedienung ausgebildet sein, wie in Fig. 5e dargestellt. Eine solche Fernbedienung weist dann lediglich nur noch ein einziges Bedienorgan auf, mit dem sämtliche oder die meisten Bedienfunktionen einstellbar sind. Für den Programmaufruf kann selbstverständlich auch eine bekannte Zehnertastatur vorgesehen werden. Es sind zwar "Trackballs" oder "Jock Shuttles" auf Fernbedienungen bekannt, jedoch weisen diese keine Ausschaltfunktion auf.
¹ Translator's Note: This is a literal translation of the German text, which appears to repeat itself here.

## Patentansprüche

1. Verfahren zum Erzeugen von Anzeigen analoger, inkrementell einstellbarer Betriebsparameter eines elektronischen Gerätes auf einem Bildschirm, wobei eine Zeichenerzeugungseinrichtung derart gesteuert wird, daß sie ein Anzeigesignal erzeugt, welches aus einer Anzahl von Zeichen besteht, wobei die Anzahl der Zeichen dem Pegel und/oder der Anzahl von eingestellten Inkrementen des dem Anzeigesignal zugeordneten Betriebsparameters in etwa proportional ist, **dadurch gekennzeichnet, daß** einem Einstellwert eines Betriebsparameters ein bestimmtes Farbzeichen und/oder ein Zeichen bestimmter Form zugeordnet ist, welches bei der Einstellung des Betriebsparameters auf den Einstellwert angezeigt wird und daß sich die Farbzeichen und/oder Formzeichen aufeinander folgender Einstellwerte unterscheiden.

2. Verfahren zum Erzeugen von Anzeigen analoger, inkrementelleinstellbarer Betriebsparameter eines elektronischen Gerätes auf einem Bildschirm, wobei eine Erzeugungseinrichtung derart gesteuert wird, daß sie ein numerisches Anzeigesignal erzeugt und daß die angezeigte numerische Angabe dem Pegel und/oder der Anzahl der eingestellten Inkremente des dem Anzeigesignal zugeordneten Einstellwertes des Betriebsparameters in etwa proportional ist, **dadurch gekennzeichnet, daß** einem Einstellwert eines Betriebsparameters ein bestimmtes Farbzeichen zugeordnet ist, welches bei der Einstellung des Betriebsparameters zusammen mit den numerischen Angaben auf dem Bildschirm angezeigt wird und daß sich die Farbzeichen aufeinander folgender Einstellwerte unterscheiden.

3. Verfahren nach Anspruch 1
**dadurch gekennzeichnet, daß** die Farbzeichen benachbarter Zeichen sich um mehr als 10 Nanometer Wellenlänge, vorzugsweise etwa 100 Nanometer Wellenlänge unterscheiden.

4. Verfahren nach Anspruch 1, 2 oder 3
**dadurch gekennzeichnet, daß** all denjenigen Zeichen, die eine bevorzugte Einstellung des Benutzers repräsentieren, das gleiche Farbzeichen oder das gleiche Formzeichen zugeordnet ist.

5. Bildschirmanzeigeeinrichtung mittels der ein Anzeigesignal eines inkrementell einstellbaren Betriebsparameters eines elektronischen Gerätes erzeugbar ist, wobei das Anzeigesignal
a) aus einem numerischen Anzeigewert und/oder
b) aus einer Anzahl von Zeichen besteht,
wobei
aa) der angezeigte numerische Anzeigewert in etwa proportional zum Pegel und/oder der Anzahl der eingestellten Inkremente des dem Signal zugeordneten Einstellwertes ist, oder
bb) die Anzahl der Zeichen dem Pegel und/oder der Anzahl der eingestellten Inkremente des dem Anzeigesignal zugeordneten Einstellwertes in etwa proportional ist,
**dadurch gekennzeichnet, daß** einem Betriebsparametereinstellwert ein bestimmtes Farbzeichen und/oder Zeichen bestimmter Form zugeordnet ist und daß sich die Farbzeichen und/oder Zeichen bestimmter Zeichenformen aufeinander folgender Betriebsparametereinstellwerte unterscheiden.

6. Bildschirmanzeigeeinrichtung nach Anspruch 5,
**dadurch gekennzeichnet, daß** im Bereich der Normaleinstellung eines Betriebsparameters, z. B. im Bereich der Zimmerlautstärke, die Schrittweite bzw. der Inkrementenhub geringer ist als im Bereich der Maximalwerte und/oder daß die unterschiedliche Schrittweite bzw. der unterschiedliche Inkrementenhub durch das zugeordnete Zeichen selbst, d.h. durch seine Lage, Größe, Farbe oder Form, anzeigbar ist.

7. Bildschirmanzeigeeinrichtung nach Anspruch 5 oder 6,
**dadurch gekennzeichnet, daß** die Farb- und/oder Formgebung eines Zeichens und/oder einer numerischen Angabe von einer bevorzugten Einstellung des Parameters von dem Benutzer wählbar ist und mittels einer Speichereinrichtung abspeicherbar ist.

8. Bildschirmanzeigeeinrichtung nach einem der vorhergehenden Ansprüche 5 bis 7,
**dadurch gekennzeichnet, daß** die Einrichtung Mittel zum Einstellen mehrerer Betriebsparameter aufweist, die aus einem drück- und/oder drehbaren und/oder in mehrere Richtungen bewegbaren Einorgan-Stellglied bestehen, das durch eine erste Bewegung des Einorgan-Steligliedes der Einstellmodus eines Betriebsparameters aufrufbar ist und daß durch eine andere Bewegung des Bedienstellgliedes die Werteinstellung des aufgerufenen Betriebsparameters durchführbar ist.

9. Bildschirmanzeigeeinrichtung nach Anspruch 8,
**dadurch gekennzeichnet, daß** dem Einorgan-Stellglied eine Zeitschaltuhr zugeordnet ist, welche die Aktivierungsdauer des Einorgan-Stellgliedes erfaßt und in Abhängigkeit der zeitlichen Länge einer Bedienaktion des Einorgan-Stellgliedes die Einrichtung ausschaltet.

10. Bildschirmanzeigeeinrichtung nach einem der vorhergehenden Ansprüche 5 bis 9,
**dadurch gekennzeichnet, daß** das Einorgan-Stellglied mit einem Mikroprozessor gekoppelt ist, welcher einen Zeichengenerator steuert, und daß in Abhängigkeit der zeitlichen Dauer einer Bedienaktion des Einorgan-Stellgliedes ein Anzeigesignal erzeugt wird, dessen Größe in etwa proportional zur zeitlichen Dauer einer Bedienaktion des Einorgan-Steligliedes ist.

11. Bildschirmanzeigeeinrichtung nach einem der vorhergehenden Ansprüche 5 bis 10,
**dadurch gekennzeichnet, daß** ein Menüsystem zur Einstellung verschiedener Betriebs-Modi vorgesehen ist, daß durch eine bestimmte Bewegungsart des Einorgan-Stellgliedes eine Betriebs-Modi-Übersichtstabelle aufgerufen wird, daß durch eine weitere Bewegung des Einorgan-Stellgliedes ein Zeiger, der auf einen bestimmten Betriebsmodus hinweist, fixierbar ist, daß durch eine dritte Bewegung des Einorgan-Steligliedes die Werteinstellung des aufgerufenen Betriebsparameters durchführbar und anzeigbar ist und daß durch eine dritte Bewegung des Einorgan-Stellgliedes die Werteinstellung des aufgerufenen Betriebsparameters durchführbar und anzeigbar ist.

12. Bildschirmanzeigeeinrichtung nach einem der Ansprüche 8 bis 11,
**dadurch gekennzeichnet, daß** das Einorgan-Stellglied auf einer Fernbedienung ausgebildet ist.

13. Fernsehempfänger, Satellitenempfänger, Monitor, Videorecorder, TV-Karte, Graphik-oder Anzeigeeinrichtung mit einer Bildschirmanzeigeeinrichtung nach einem der vorhergehenden Ansprüche 5 bis 12.

14. Bildschirmanzeigesignal eines inkrementell einstellbaren Betriebsparameters eines elektronischen Gerätes, wobei das Bildschirmanzeigesignal aus einer Anzahl von Zeichen besteht, wobei die Anzahl der Zeichen dem Pegel des dem Bildschirmanzeigesignal zugeordneten Betriebsparameters in etwa proportional ist, **dadurch gekennzeichnet, daß** einem Einstellwert eines Betriebsparameters ein bestimmtes Farbzeichen und/oder ein Zeichen bestimmter Form zugeordnet ist, welches bei der Einstellung des Betriebsparameters auf den Einstellwert angezeigt wird und daß sich die angezeigten Farbzeichen und/oder Zeichenformen aufeinander folgender Einstellwerte unterscheiden.

## Claims

1. A process for generating displays of analog, incrementally settable operating parameters of an electronic device on a screen, a character generating device being controlled such that it generates a display signal which comprises a number of characters, the number of characters being approximately proportional to the level and/or the number of set increments of the operating parameter associated with the display signal, **characterised in that** a particular colour character and/or a character having a particular shape is associated with a setting value of an operating parameter and is displayed when the operating parameter is set to the setting value, and **in that** the colour characters and/or shape characters of successive setting values differ.

2. A process for generating displays of analog, incrementally settable operating parameters of an electronic device on a screen, a generating device being controlled such that it generates a numerical display signal and such that the displayed numerical information is approximately proportional to the level and/or the number of set increments of that setting value of the operating parameter which is associated with the display signal, **characterised in that** a particular colour character is associated with a setting value of an operating parameter and is displayed on the screen together with the numerical information when the operating parameter is set, and **in that** the colour characters of successive setting values differ.

3. A process according to Claim 1, **characterised in that** the colour characters of adjacent characters differ by more than 10 nanometers wave-length, preferably approximately 100 nanometers wave-length.

4. A process according to Claim 1, 2 or 3, **characterised in that** the same colour character or the same shape character is associated with all those characters which represent a preferred setting of the user.

5. A screen display device by means of which a display signal of an incrementally settable operating parameter of an electronic device may be generated, the display signal
a) comprising a numerical display value and/or
b) a number of characters,
aa) the displayed numerical display value being approximately proportional to the level and/or the number of set increments of the setting value associated with the signal, or
bb) the number of characters being approximately proportional to the level and/or the number of set increments of the setting value associated with the display signal,
**characterised in that** a particular colour character and/or a character having a particular shape is associated with an operating parameter setting value, and **in that** the colour characters, and/or characters having particular character shapes, of successive operating parameter setting values differ.

6. A screen display device according to Claim 5, **characterised in that**, in the region of the normal setting of an operating parameter, for example in the region of a moderate volume, the step size or the incrementation is smaller than in the region of the maximum values, and/or **in that** the different step size or the different incrementation may be displayed by the associated character itself, i.e. by its position, size, colour or shape.

7. A screen display device according to Claim 5 or 6, **characterised in that** the coloration and/or shaping of a character, and/or numerical information, of a preferred setting of the parameter may be selected by the user and may be stored by means of a memory device.

8. A screen display device according to one of the preceding Claims 5 to 7, **characterised in that** the device has means for setting a plurality of operating parameters, which comprise a one-unit control element which may be pushed and/or rotated and/or moved in a plurality of directions, **in that** the setting mode of an operating parameter may be called by a first movement of the one-unit control element, and **in that** the value of the called operating parameter may be set by another movement of the operating control element.

9. A screen display device according to Claim 8, **characterised in that** a time switch is associated with the one-unit control element, said time switch detecting the activation time of the one-unit control element and switching off the device in dependence on the duration of an operating action of the one-unit control element.

10. A screen display device according to one of the preceding Claims 5 to 9, **characterised in that** the one-unit control element is coupled to a microprocessor which controls a character generator, and **in that** a display signal is generated in dependence on the duration of an operating action of the one-unit control element, the magnitude of said display signal being approximately proportional to the duration of an operating action of the one-unit control element.

11. A screen display device according to one of the preceding Claims 5 to 10, **characterised in that** a menu system is provided for setting different operating modes, **in that** an operating-mode overview table is called by a particular movement type of the one-unit control element, **in that** a pointer, which indicates a particular operating mode, may be positioned by a further movement of the one-unit control element, **in that** the value setting of the called operating parameter may be carried out and displayed by a third movement of the one-unit control element, and **in that** the value setting of the called operating parameter may be carried out and displayed by a third movement of the one-unit control element.¹

12. A screen display device according to one of Claims 8 to 11, **characterised in that** the one-unit control element is a remote-control construction.

13. A television receiver, satellite receiver, monitor, video recorder, TV card, graphics or display device having a screen display device according to one of the preceding Claims 5 to 12.

14. A screen display signal of an incrementally settable operating parameter of an electronic device, the screen display signal comprising a number of characters, the number of characters being approximately proportional to the level of the operating parameter associated with the screen display signal, **characterised in that** a particular colour character and/or a character having a particular shape is associated with a setting value of an operating parameter and is displayed when the operating parameter is set to the setting value, and **in that** the displayed colour characters and/or character shapes of successive setting values differ.

## Revendications

1. Procédé destiné à générer sur un écran de s affichages de paramètres opératoires analogiques, à régler par incrémentation, relatifs à un appareil électronique, dans lequel un générateur de symboles est commandé de telle sorte qu'il émet un signal d'affichage qui est formé par un certain nombre de symboles, le nombre des symboles étant pratiquement proportionnel au niveau et/ou au nombre d'incréments définis pour le paramètre opératoire associé au signal d'affichage, **caractérisé en ce qu'**une valeur de réglage d'un paramètre opératoire est associée à un symbole avec une couleur déterminée et/ou une forme déterminée, lequel est affiché au moment du réglage du paramètre opératoire à la valeur souhaitée et **en ce que** la couleur et/ou la forme des symboles sont différentes pour des valeurs de réglage successives.

2. Procédé destiné à générer sur un écran des affichages de paramètres opératoires analogiques, à régler par incrémentation, relatifs à un appareil électronique, dans lequel un générateur est commandé de telle sorte qu'il émet un signal d'affichage numérique et de telle sorte que l'information numérique affichée est pratiquement proportionnelle au niveau et/ou au nombre d'incréments définis pour la valeur de réglage du paramètre opératoire associée au signal d'affichage, **caractérisé en ce qu'**une valeur de réglage d'un paramètre opératoire est associée à un symbole de couleur déterminé, lequel est affiché sur l'écran au moment du réglage du paramètre opératoire conjointement avec les informations numériques et **en ce que** les symboles de couleur sont différents pour des valeurs de réglage successives.

3. Procédé selon la revendication 1, **caractérisé en ce que** les couleurs de symboles voisins se différencient par des longueurs d'onde supérieures à 10 nanomètres, de préférence par des longueurs d'onde égales à environ 100 nanomètres.

4. Procédé selon la revendication 1, 2 ou 3, **caractérisé en ce que** tous les symboles qui représentent un réglage préféré de l'utilisateur sont associés au même symbole de couleur ou au même symbole de forme.

5. Dispositif d'affichage sur écran au moyen duquel peut être généré un signal d'affichage d'un paramètre opératoire, à régler par incrémentation, relatif à un appareil électronique, dans lequel le signal d'affichage
a) est formé par une valeur d'affichage numérique et/ou
b) par un certain nombre de symboles,
sachant que
aa) la valeur d'affichage numérique affichée est pratiquement proportionnelle au niveau et/ou au nombre d'incréments définis pour la valeur de réglage associée au signal, ou
bb) le nombre de symboles est pratiquement proportionnel au niveau et/ou au nombre d'incréments définis pour la valeur de réglage associée au signal,
**caractérisé en ce qu'**une valeur de réglage d'un paramètre opératoire est associée à un symbole avec une couleur déterminée et/ou une forme déterminée et **en ce que** les valeurs de réglage successives des paramètres opératoires ont des symboles de couleur déterminée et/ou des symboles de forme déterminée différents.

6. Dispositif d'affichage sur écran selon la a revendication 5, **caractérisé en ce que** dans le domaine de réglage normal d'un paramètre opératoire, tel que dans le domaine du volume sonore modéré, le pas de progression, à savoir l'incrémentation, est inférieur à celui dans le domaine des valeurs maximales, et/ou **en ce que** les différents pas de progression, à savoir les différentes incrémentations, peuvent être affichés par le symbole associé, c'est-à-dire par sa position, sa dimension, sa couleur ou sa forme.

7. Dispositif d'affichage sur écran selon la a revendication 5 ou 6, **caractérisé en ce que** la définition de couleur et/ou de forme d'un symbole et/ou d'une information numérique sur un réglage préféré du paramètre peut être choisie par l'utilisateur et peut être mémorisée au moyen d'une unité de mémoire.

8. Dispositif d'affichage sur écran selon une des revendications précédentes 5 à 7, **caractérisé en ce que** le dispositif comporte des moyens de réglage de plusieurs paramètres opératoires, qui sont formés par un bouton unique de commande susceptible d'être enfoncé et/ou entraîné en rotation et/ou déplacé dans plusieurs directions, **en ce qu'**un premier mouvement du bouton unique de commande permet d'activer le mode de réglage d'un paramètre opératoire et **en ce qu'**un autre mouvement du bouton unique de commande permet de réguler la valeur du paramètre opératoire activé.

9. Dispositif d'affichage sur écran selon la revendication 8, **caractérisé en ce que** le bouton unique de commande est associé à un temporisateur, qui enregistre la durée d'activation du bouton unique de commande et en fonction de la durée de l'action exercée sur le bouton unique de commande déconnecte le dispositif.

10. Dispositif d'affichage sur écran selon une des revendications précédentes 5 à 9, **caractérisé en ce que** le bouton unique de commande est couplé à un microprocesseur, qui commande un générateur de symboles et **en ce qu'**en fonction de la durée d'une action exercée sur le bouton unique de commande un signal d'affichage est émis, dont la grandeur est sensiblement proportionnelle à la durée d'une action exercée sur le bouton unique de commande.

11. Dispositif d'affichage sur écran selon une des revendications précédentes 5 à 10, **caractérisé en ce qu'**il est prévu un système de menus destiné à activer différents modes de paramétrage, **en ce qu'**un mouvement déterminé du bouton unique de commande active une table regroupant les différents modes de paramétrage, **en ce qu'**un autre mouvement du bouton unique de commande permet de fixer un pointeur qui désigne un mode de paramétrage déterminé, **en ce qu'**un troisième mouvement du bouton unique de commande permet de régler et d'afficher la valeur du paramètre opératoire activé et **en ce qu'**un troisième mouvement du bouton unique de commande permet de régler et d'afficher la valeur du paramètre opératoire activé.

12. Dispositif d'affichage sur écran selon une des revendications 8 à 11, **caractérisé en ce que** le bouton unique de commande est réalisé sur une télécommande.

13. Poste de télévision, système de réception satellite, moniteur, lecteur vidéo, carte de télévision, dispositif graphique ou dispositif d'affichage muni d'un dispositif d'affichage sur écran selon une des revendications précédentes 5 à 12.

14. Signal d'affichage sur écran d'un paramètre opératoire, à régler par incrémentation, relatif à un appareil électronique, sachant que le signal d'affichage sur écran est formé par un certain nombre de symboles, le nombre de symboles étant sensiblement proportionnel au niveau du paramètre opératoire associé au signal d'affichage sur écran, **caractérisé en ce qu'**une valeur de réglage d'un paramètre opératoire est associée à un symbole de couleur déterminée et/ou un symbole de forme déterminée, lequel est affiché au moment du réglage du paramètre opératoire à une valeur de réglage et **en ce que** les symboles de couleur et/ou les symboles de forme affichés sont différents pour des valeurs de réglage successives.
